# EUROPEAN PATENT APPLICATION

(11) **EP 4 768 696 A1**
(43) Date of publication of application: **01.07.2026**
(21) Application number: 25227595.3
(22) Date of filing: 30.12.2025
(51) Int. Cl.: F01D 11/08, F01D 11/24, F01D 25/24

(54) **RING SEGMENT COOLING STRUCTURE FOR A GAS TURBINE ENGINE**

(30) Priority: 30.12.2024 KR 20240200199
(71) Applicant: Doosan Enerbility Co., Ltd., Seongsan-gu Changwon-si, Gyeongsangnam-do 51711 (KR); UIF (University Industry Foundation), Yonsei University, Seoul 03722 (KR)
(72) Inventor: KIM, Jeong Ju, 13629 Seongnam-si, Gyeonggi-do (KR); JANG, Yun Chang, 51426 Changwon-si, Gyeongsangnam-do (KR); CHO, Hyung Hee, 06509 Seoul (KR); KIM, Gyeong Ryun, 03782 Seoul (KR); KIM, Jae Hyeong, 53241 Geoje-si, Gyeongsangnam-do (KR); JUN, Hyung Joon, 16556 Suwon-si, Gyeonggi-do (KR)
(74) Representative: BCKIP Part mbB

(57) **Abstract**

A ring segment cooling structure with enhanced cooling performance, a ring segment (1600), and a gas turbine (1300) including the same. The ring segment cooling structure includes a cooling channel (1630) and a rib turbulator (1637). The cooling channel is formed inside a shield wall (1611) of a ring segment mounted to a turbine casing that accommodates blades (1400) and is formed in a wavy shape so as to allow cooling air to flow through the cooling channel. The rib turbulator is installed in the wavy-shaped cooling channel.

## Description

### BACKGROUND

### 1. Technical Field

The present disclosure relates to a ring segment cooling structure, a ring segment including the same, and a gas turbine.

### 2. Description of the Related Art

A gas turbine is a power-generating engine that mixes compressed air from a compressor with fuel and combusts the mixture, and rotates a turbine by using high-temperature gas generated by the combustion. Gas turbines are used to drive generators, aircrafts, ships, trains, and the like.

In general, a gas turbine includes a compressor, a combustor, and a turbine. The compressor draws in air from the outside, compresses the air, and delivers the air to the combustor. The air compressed by the compressor is in a high-pressure and high-temperature state. The combustor mixes the compressed air received from the compressor with fuel and combusts the mixture. Combustion gas generated by the combustion is injected to the turbine. As the directed combustion gas passes through turbine vanes and turbine blades, rotational force is generated, causing a rotor of the turbine to rotate.

Ring segments are installed inside the turbine to prevent leakage of high-temperature, high-pressure combustion gas that rotates the rotor, thereby improving the efficiency of the gas turbine. The ring segments are mounted within a turbine casing that accommodates the blades and are positioned to surround the outer periphery of the rotating blades.

In this case, one surface of the ring segments facing the internal space of the turbine casing is exposed to high-temperature, high-pressure combustion gas, and a high thermal load may occur on the surface, and the ring segments may be damaged due to the thermal load.

Such ring segments have a plurality of cooling channels formed therein to prevent damage due to thermal load, and research and development on cooling structures that enhance cooling efficiency to prevent thermal-load-induced damage have been continuously conducted.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and an objective of the present disclosure is to provide a ring segment cooling structure with enhanced cooling performance, a ring segment including the same, and a gas turbine.

A ring segment cooling structure according to an embodiment of the present disclosure includes a cooling channel and a rib turbulator. The cooling channel is formed inside a shield wall of a ring segment mounted to a casing that accommodates blades and is formed in a wavy shape so as to allow cooling air to flow through the cooling channel. The rib turbulator is installed in the wavy-shaped cooling channel.

In the ring segment cooling structure according to the embodiment of the present disclosure, when a width of the cooling channel is defined as W, a lateral dimension w of the rib turbulator may satisfy 0.1W ≤ w ≤ 0.3W, and when a height of the cooling channel is defined as H, a height dimension e of the rib turbulator may satisfy 0.1H ≤ e ≤ 0.3H.

In the ring segment cooling structure according to the embodiment of the present disclosure, an angle α formed between a longitudinal direction of the rib turbulator and a direction of a central axis of a turbine may satisfy 90° ≤ α ≤ 135°.

In the ring segment cooling structure according to the embodiment of the present disclosure, the rib turbulator may be formed to protrude from each of upper and lower surfaces of the cooling channel in mutually opposing directions.

In the ring segment cooling structure according to the embodiment of the present disclosure, the cooling channel may have a shape in which a plurality of unit channel sections is connected in series with each of the unit channel sections having one convex portion and one concave portion, and the rib turbulator may include a plurality of rib turbulators provided in each of the unit channel sections.

In the ring segment cooling structure according to the embodiment of the present disclosure, the rib turbulator may be installed at a portion at which the convex portion and the concave portion are in contact with each other.

In the ring segment cooling structure according to the embodiment of the present disclosure, the cooling channel and the rib turbulator may be manufactured by using an additive manufacturing (AM) method.

A ring segment according to an embodiment of the present disclosure includes: a shield wall facing an inner wall of a turbine casing that accommodates blades; a first hook portion and a second hook portion protruding from the shield wall toward the turbine casing and coupled to the turbine casing; a main cavity formed between the first hook portion and the second hook portion; and a cooling structure which is formed within the shield wall and through which cooling air flows. The cooling structure includes: a cooling channel; and a rib turbulator. The cooling channel is formed inside a shield wall of a ring segment mounted to a casing that accommodates blades and is formed in a wavy shape so as to allow cooling air to flow through the cooling channel. The rib turbulator is installed in the wavy-shaped cooling channel.

In the ring segment according to the embodiment of the present disclosure, when a width of the cooling channel is defined as W, a lateral dimension w of the rib turbulator may satisfy 0.1W ≤ w ≤ 0.3W, and when a height of the cooling channel is defined as H, a height dimension e of the rib turbulator may satisfy 0.1H ≤ e ≤ 0.3H.

In the ring segment according to the embodiment of the present disclosure, an angle α formed between a longitudinal direction of the rib turbulator and a direction of a central axis of a turbine may satisfy 90° ≤ α ≤ 135°.

In the ring segment according to the embodiment of the present disclosure, the rib turbulator may be formed to protrude from each of upper and lower surfaces of the cooling channel in mutually opposing directions.

In the ring segment according to the embodiment of the present disclosure, the cooling channel may have a shape in which a plurality of unit channel sections is connected in series with each of the unit channel sections having one convex portion and one concave portion, and the rib turbulator may include a plurality of rib turbulators provided in each of the unit channel sections.

In the ring segment according to the embodiment of the present disclosure, the rib turbulator may be installed at a portion at which the convex portion and the concave portion are in contact with each other.

In the ring segment according to the embodiment of the present disclosure, the cooling channel and the rib turbulator may be manufactured by using an additive manufacturing (AM) method.

A gas turbine according to an embodiment of the present disclosure includes: a plurality of blades installed on a rotatable rotor disk; a turbine casing configured to accommodate the blades; and a plurality of ring segments coupled to the turbine casing and positioned outside the blades. Each of the ring segments includes: a shield wall facing an inner wall of the turbine casing that accommodates the blades; a first hook portion and a second hook portion protruding from the shield wall toward the turbine casing and coupled to the turbine casing; a main cavity formed between the first hook portion and the second hook portion; and a cooling structure which is formed within the shield wall and through which cooling air flows. The cooling structure includes: a cooling channel; and a rib turbulator. The cooling channel is formed inside a shield wall of a ring segment mounted to a casing that accommodates blades and is formed in a wavy shape so as to allow cooling air to flow through the cooling channel. The rib turbulator is installed in the wavy-shaped cooling channel.

In the gas turbine according to the embodiment of the present disclosure, when a width of the cooling channel is defined as W, a lateral dimension w of the rib turbulator may satisfy 0.1W ≤ w ≤ 0.3W, and when a height of the cooling channel is defined as H, a height dimension e of the rib turbulator may satisfy 0.1H ≤ e ≤ 0.3H.

In the gas turbine according to the embodiment of the present disclosure, an angle α formed between a longitudinal direction of the rib turbulator and a direction of a central axis of a turbine may satisfy 90° ≤ α ≤ 135°.

In the gas turbine according to the embodiment of the present disclosure, the rib turbulator may be formed to protrude from each of upper and lower surfaces of the cooling channel in mutually opposing directions.

In the gas turbine according to the embodiment of the present disclosure, the cooling channel may have a shape in which a plurality of unit channel sections is connected in series with each of the unit channel sections having one convex portion and one concave portion, and the rib turbulator may include a plurality of rib turbulators provided in each of the unit channel sections.

In the gas turbine according to the embodiment of the present disclosure, the rib turbulator may be installed at a portion at which the convex portion and the concave portion are in contact with each other.

In the gas turbine according to the embodiment of the present disclosure, the cooling channel and the rib turbulator may be manufactured by using an additive manufacturing (AM) method.

Further specific details of embodiments according to various aspects of the present disclosure are included in the following detailed description.

According to an embodiment of the present disclosure, a swirling phenomenon of cooling air caused by the rib turbulators, together with an increase in the contact area and residence time of cooling air due to the cooling channels, may enhance the cooling efficiency.

### BRIEF DESCRIPTION OF THE DRAWINGS

FIG. 1 is a perspective view of a gas turbine according to an embodiment of the present disclosure, with a portion thereof cut away;
FIG. 2 is a cross-sectional view schematically illustrating a structure of the gas turbine according to an embodiment of the present disclosure;
FIG. 3 is a perspective view illustrating a ring segment according to an embodiment of the present disclosure;
FIG. 4 is a cut-away perspective sectional view of a ring segment according to an embodiment of the present disclosure;
FIG. 5 is a transverse cross-sectional view of a shield plate according to an embodiment of the present disclosure;
FIG. 6 is a perspective view illustrating a rib turbulator according to an embodiment of the present disclosure;
FIG. 7 is an enlarged view of portion A of FIG. 5 according to an embodiment of the present disclosure;
FIG. 8A is a cross-sectional view of portion B of FIG. 7 as seen in direction b according to an embodiment of the present disclosure;
FIG. 8B is a cross-sectional view of portion B of FIG. 7 as seen in direction b according to an embodiment of the present disclosure;
FIG. 9A is a diagram illustrating the cooling efficiency of a cooling channel without rib turbulators according to an embodiment of the present disclosure;
FIG. 9B is a diagram illustrating the cooling efficiency of a cooling channel with rib turbulators according to an embodiment of the present disclosure;
FIG. 9C is a diagram illustrating the cooling efficiency of a cooling channel with rib turbulators according to an embodiment of the present disclosure; and
FIG. 10 is a diagram illustrating a comparison of the cooling efficiency of a cooling channel with rib turbulators with the cooling efficiency of a cooling channel without rib turbulators according to an embodiment of the present disclosure.

### DETAILED DESCRIPTION

Since the present disclosure can be modified in various ways and can have various embodiments, specific embodiments will be exemplified and explained in detail in the detailed description. However, it should be noted that the present disclosure is not limited thereto, and may include all of modifications, equivalents, and substitutions within the spirit and scope of the present disclosure.

Terms used herein are used to merely describe specific embodiments, and are not intended to limit the present disclosure. As used herein, an element expressed as a singular form includes a plurality of elements, unless the context clearly indicates otherwise. Further, it will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, preferred embodiments of the present disclosure will be described in detail with reference to the accompanying drawings. It is noted that like elements are denoted in the drawings by like reference symbols as whenever possible. Further, the detailed description of known functions and configurations that may obscure the gist of the present disclosure will be omitted. For the same reason, some of the elements in the drawings are exaggerated, omitted, or schematically illustrated.

Hereinafter, a gas turbine according to a first embodiment of the present disclosure will be described.

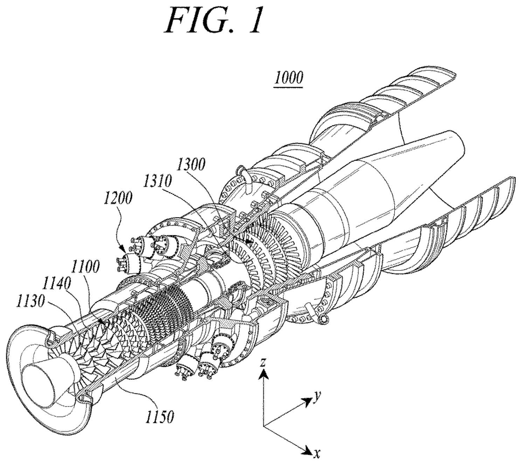

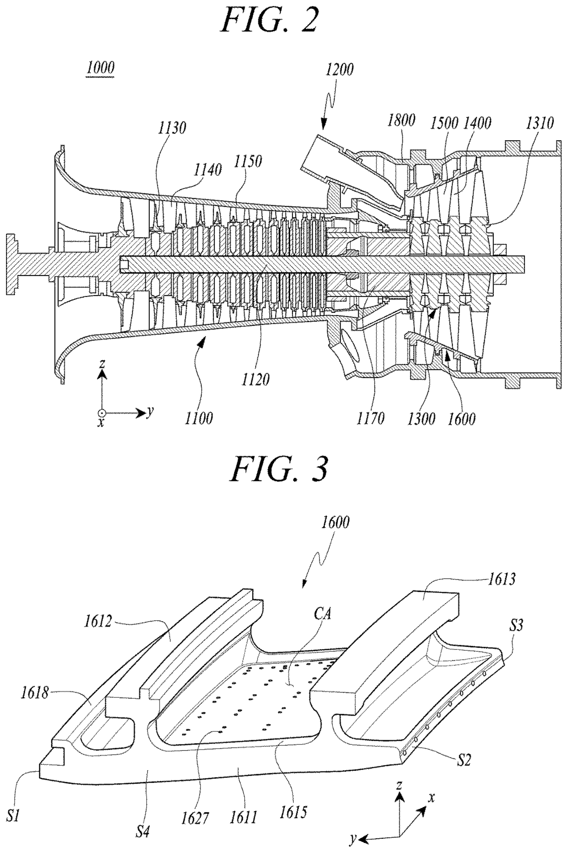

FIG. 1 is a view illustrating an interior of a gas turbine according to an embodiment of the present disclosure, and FIG. 2 is a longitudinal cross-sectional view of a portion of the gas turbine of FIG. 1.

Referring to FIGS. 1 and 2, a thermodynamic cycle of a gas turbine 1000 according to the present embodiment may ideally follow a Brayton cycle. The Brayton cycle may include four processes, namely isentropic compression (adiabatic compression), isobaric heat addition, isentropic expansion (adiabatic expansion), and isobaric heat rejection. That is, atmospheric air may be drawn in and compressed to a high pressure, fuel may be combusted under an isobaric condition to release thermal energy, the high-temperature combustion gas may be expanded and converted into kinetic energy, and exhaust gas containing residual energy may be discharged into the atmosphere. That is, the cycle may be composed of four processes: compression, heating, expansion, and heat rejection.

The gas turbine 1000 that realizes the Brayton cycle described above may include a compressor 1100, a combustor 1200, and a turbine 1300, as illustrated in FIG. 1. Although the following description will be given with reference to FIG. 1, the description of the present disclosure may also be broadly applicable to a turbine engine having a configuration equivalent to that of the gas turbine 1000 exemplarily illustrated in FIG. 1.

Referring to FIG. 1, the compressor 1100 of the gas turbine 1000 may draw in air from the outside and compress the air. The compressor 1100 may supply compressed air, which is compressed by compressor blades 1130, to the combustor 1200, and may also supply cooling air to high-temperature regions of the gas turbine 1000 that require cooling. In this case, since the drawn-in air undergoes an adiabatic compression process in the compressor 1100, the pressure and temperature of the air passing through the compressor 1100 increase.

The compressor 1100 may be designed as a centrifugal compressor or an axial compressor. In a small gas turbine, a centrifugal compressor is applied, whereas in a large gas turbine such as the gas turbine 1000 illustrated in FIG. 1, a multi-stage axial compressor 1100 is generally applied because a large amount of air must be compressed. In the multi-stage axial compressor 1100, the blades 1130 of the compressor 1100 rotate according to the rotation of a center tie-rod 1120 and the rotor disk, thereby compressing incoming air and allowing the compressed air to flow toward compressor vanes 1140 located at a rear end. As the air passes through the blades 1130 formed in multiple stages, the air is progressively compressed to a higher pressure.

The compressor vanes 1140 are mounted inside a housing 1150, and the plurality of compressor vanes 1140 may be mounted to form a stage. The compressor vanes 1140 guide compressed air, which has flowed from the upstream compressor blades 1130, toward the downstream blades 1130. In an embodiment, at least some of the plurality of compressor vanes 1140 may be mounted to be rotatable within a predetermined range to control the flow rate of air.

The compressor 1100 may be driven by using a portion of power output from the turbine 1300. To this end, as shown in FIG. 1, the rotary shaft of the compressor 1100 may be directly connected to the rotary shaft of the turbine 1300 by a torque tube 1170. In the case of a large gas turbine 1000, approximately half of power generated by the turbine 1300 may be consumed to drive the compressor 1100.

Meanwhile, the combustor 1200 mixes compressed air supplied from the outlet of the compressor 1100 with fuel and burns the mixture at constant pressure to generate high-energy combustion gas. In the combustor 1200, the incoming compressed air is mixed with fuel and combusted to produce high-temperature, high-pressure combustion gas with high energy, and through the constant-pressure combustion process, the temperature of the combustion gas is raised to a level that the combustor and turbine components can withstand.

The combustor 1200 may include multiple combustors arranged within the housing formed in a cell structure, and may be composed of a burner having a fuel injection nozzle, a combustor liner constituting a combustion chamber, and a transition piece connecting the combustor to the turbine.

Meanwhile, high-temperature, high-pressure combustion gas discharged from the combustor 1200 is supplied to the turbine 1300. As the supplied high-temperature, high-pressure combustion gas expands, it impinges on and imparts reaction force to turbine blades 1400 of the turbine 1300, thereby generating rotational torque. The generated rotational torque is transmitted to the compressor 1100 through the aforementioned torque tube 1170, and any power exceeding power that required to drive the compressor 1100 may be used to drive a generator, etc.

The turbine 1300 includes a rotor disk 1310, a turbine casing 1800, the plurality of turbine blades 1400 radially arranged on the rotor disk 1310, and a plurality of ring segments 1600 surrounding vanes 1500 and the turbine blades 1400.

The rotor disk 1310 has a substantially disc-shaped form, and a plurality of grooves is formed on an outer periphery thereof. The grooves are formed to have curved surfaces, and the turbine blades 1400 and the vanes 1500 are inserted into the grooves. The turbine casing 1800 is formed as a frusto-conical tube, and the turbine blades 1400, the vanes 1500, and the ring segments 1600 are accommodated within the turbine casing 1800.

The turbine blades 1400 may be coupled to the rotor disk 1310 by a dovetail or other similar method. The vanes 1500 are fixed so as not to rotate and guide the flow direction of combustion gas passing through the turbine blades 1400.

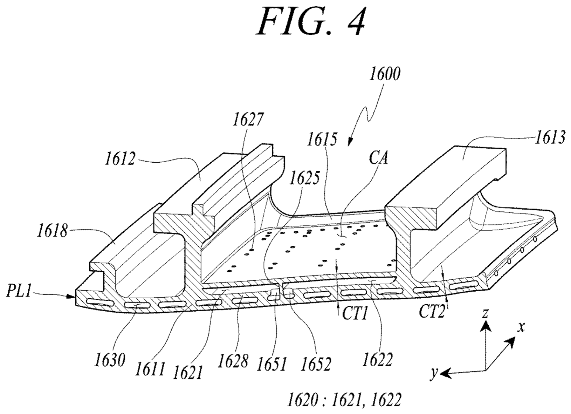

FIG. 3 is a perspective view illustrating a ring segment according to an embodiment of the present disclosure, and FIG. 4 is a cut-away perspective view of the ring segment according to an embodiment of the present disclosure.

Referring to FIGS. 3 and 4, the ring segments 1600 are mounted on the inner wall of the turbine casing 1800. Each of the plurality of ring segments 1600 is continuously arranged along the circumferential (X-axis) direction of the turbine casing 1800 to form a ring shape.

In the present embodiment, the ring segments 1600 are exemplarily shown as being mounted to the turbine 1300, but the present disclosure is not limited thereto. The ring segments 1600 may also be mounted to a rotating machine such as the compressor 1100. Here, the term "rotating machine" refers to an apparatus having rotating blades, and includes a compressor and a turbine.

The ring segments 1600 having ring shapes surround the turbine blades 1400 from the outside thereof so as to prevent leakage of combustion gas. In addition, in the longitudinal (Y-axis) direction of the central axis of the turbine 1300, the ring segments 1600 are alternately arranged with vanes 1500, and each of the ring segments 1600 is inserted between the outer shrouds of the vanes 1500 so as to face the vanes 1500.

The ring segment 1600 may include a shield wall 1611, a first hook portion 1612, a second hook portion 1613, a main cavity CA, a cooling space 1620, and a channel layer PL1. The shield wall 1611 is formed as a rectangular plate, and the first hook portion 1612 and the second hook portion 1613 protrude in the radial direction (the z-axis direction) of the turbine 1300 from the outer surface of the shield wall 1611 toward the turbine casing 1800, and are inserted into grooves formed in the turbine casing 1800.

In addition, the shield wall 1611 may include a first side surface S1 and a second side surface S2 facing the turbine vanes 1500, and a third side surface S3 and a fourth side surface S4 facing adjacent ring segments. The first side S1 and the second side S2 extend in a direction (an x-axis direction) parallel to the first hook portion 1612, and the third side surface S3 and the fourth side surface S4 extend in a direction (a y-axis direction) intersecting the first side S1.

The main cavity CA is formed between the first hook portion 1612 and the second hook portion 1613, and air for cooling is supplied into the main cavity CA. An auxiliary hook 1618 may be formed on the outer side of the first hook portion 1612.

A reinforcing protrusion portion 1615 protrudes from the shield wall 1611 and extends in a direction from the first hook portion 1612 toward the second hook portion 1613. The shield wall 1611 may have two reinforcing protrusion portions 1615 formed thereon, and the reinforcing protrusion portions 1615 protrude from opposite lateral ends of the shield wall 1611. The reinforcing protrusion portions 1615 extend from the first hook portion 1612 to the second hook portion 1613, thereby connecting the first hook portion 1612 and the second hook portion 1613. The main cavity CA is formed by being surrounded by the first hook portion 1612, the second hook portion 1613, and the reinforcing protrusion portions 1615.

Inside the shield wall 1611, the cooling space 1620, the channel layer PL1, and an impact sheet 1628 may be formed. The cooling space 1620 is formed within the shield wall 1611 and receives air from the main cavity CA to store cooling air. The cooling space 1620 is divided into a first cooling space 1621 and a second cooling space 1622 by a web 1625, and the web 1625 extends in the longitudinal direction of the first hook portion 1612. In addition, the web 1625 is arranged upright in the thickness direction of the shield wall 1611.

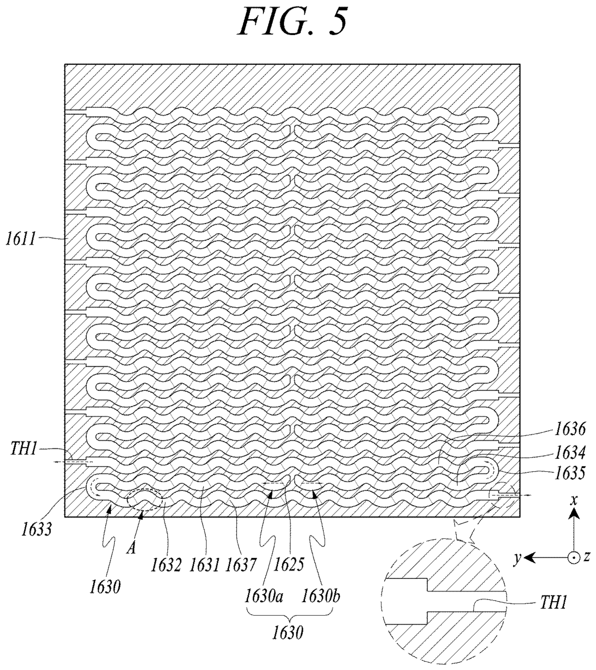

The shield wall 1611 is provided with a plurality of impingement holes 1627 for delivering cooling air from the main cavity CA to the cooling space 1620. The web 1625 extends up to the channel layer PL1 and may divide a cooling channel 1630 (one example illustrated in FIG. 5).

The impact sheet 1628, which is cooled by air introduced into the cooling space 1620, is formed between the cooling space 1620 and the channel layer PL1. The air introduced into the cooling space 1620 through the impingement holes 1627 impinges on the impact sheet 1628, thereby cooling the impact sheet 1628.

The cooling space 1620 is positioned between the first hook portion 1612 and the second hook portion 1613, and is located outward in the thickness direction of the shield wall 1611 relative to the channel layer PL1. The cooling space 1620 may have a rectangular cross-section. The portion between the first hook portion 1612 and the second hook portion 1613 is formed to have a first thickness CT1, and each of the lateral portions of the first hook portion 1612 and the second hook portion 1613 is formed to have a second thickness CT2 smaller than the first thickness CT1. The cooling space 1620 is located in the portion having the first thickness CT1.

FIG. 5 is a transverse cross-sectional view of a shield plate according to an embodiment of the present disclosure.

Referring to FIG. 5, a plurality of cooling channels 1630 which receives cooling air from the cooling space 1620 and through which the cooling air flows is formed in the channel layer PL1. Each of the cooling channels 1630 may extend in a direction (a y-axis direction) intersecting the longitudinal direction of the first hook portion 1612.

The channel layer PL1 and the cooling space 1620 are spaced apart from each other in the thickness direction of the shield wall 1611, with the channel layer PL1 positioned below the cooling space 1620. In addition, the channel layer PL1 is formed to be wider than the cooling space 1620 and may extend from the first side surface S1 to the second side surface S2.

The channel layer PL1 includes a plurality of first cooling channels 1630a, which discharges air toward the first side surface S1 of the shield wall 1611, and a plurality of second cooling channels 1630b, which discharges air toward the second side surface S2 opposite to the first side surface S1. Each of the first cooling channels 1630a and each of the second cooling channels 1630b may be separated by the web 1625, so that the longitudinal end portions of the first cooling channel 1630a and the second cooling channel 1630b are spaced apart from each other with the web 1625 disposed therebetween.

The cooling channel 1630 includes the first cooling channel 1630a and the second cooling channel 1630b. Cooling air flows in opposite directions through the first cooling channels 1630a and the second cooling channels 1630b, thereby cooling the shield wall.

The shield wall 1611 is formed with a plurality of first passages 1651, which connects the first cooling channels 1630a to the first cooling space 1621, and a plurality of second passages 1652, which connects the second cooling channels 1630b to the second cooling space 1622.

Each of the first passages 1651 and each of the second passages 1652 are spaced apart from each other with the web 1625 disposed therebetween and may be positioned adjacent to the web 1625. Accordingly, air introduced into the first cooling space 1621 and the second cooling space 1622 may cool the web 1625 and the impact sheet 1628 and then be supplied to the cooling channel through the first passage 1651 or the second passage 1652. In addition, the plurality of first cooling channels 1630a may be disposed to be spaced apart from each other in the longitudinal direction of the web 1625, and the plurality of second cooling channels 1630b may also be disposed to be spaced apart from each other in the longitudinal direction of the web 1625.

Each of the first cooling channel 1630a and the second cooling channel 1630b may have a serpentine structure in which concave portions and convex portions are alternately formed. The first cooling channel 1630a and the second cooling channel 1630b may extend in a wavy pattern or in a sinusoidal pattern. The serpentine structure, the wavy pattern, and the sinusoidal pattern are collectively defined as a wavy shape.

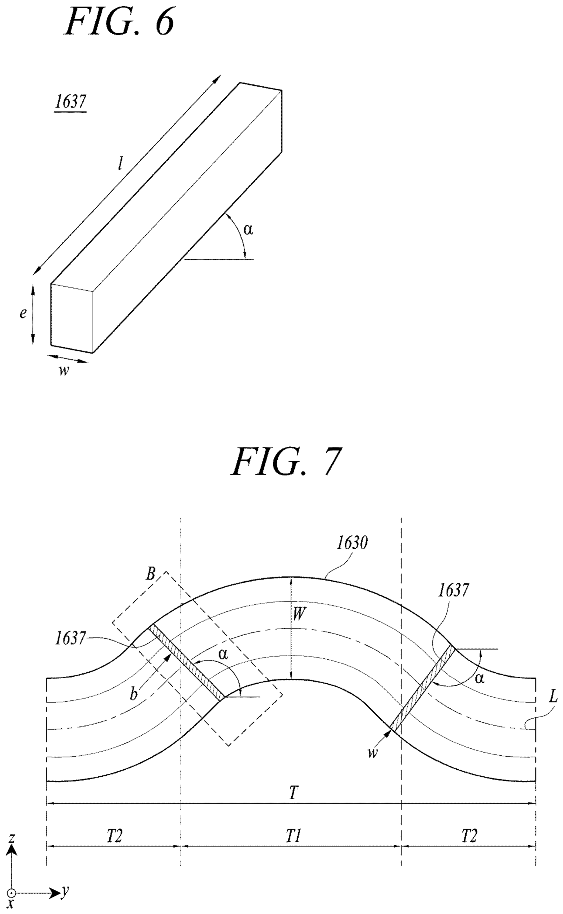

In addition, rib turbulators 1637 are installed in the cooling channels 1630 (i.e., 1630a and 1630b). Details of the rib turbulators 1637 are described below with reference to FIG. 6.

The first cooling channel 1630a may include a first intermediate channel 1631, which extends from the first passage 1651 toward the second side surface S2 of the shield wall 1611, a first discharge channel 1632, which extends from the first intermediate channel 1631 toward the first side surface S1 of the shield wall 1611 to discharge cooling air, and a first connecting channel 1633, which is arcuately curved to connect the first intermediate channel 1631 and the first discharge channel 1632.

In addition, the second cooling channel 1630b may include a second intermediate channel 1634, which extends from the second passage 1652 toward the first side surface S1 of the shield wall 1611, a second discharge channel 1636, which extends from the second intermediate channel 1634 to the second side surface S2 of the shield wall 1611 to discharge cooling air, and a second connecting channel 1635, which is arcuately curved to connect the second intermediate channel 1634 and the second discharge channel 1636.

Accordingly, the first cooling channel 1630a and the second cooling channel 1630b may efficiently cool the shield wall 1611 by using a reduced amount of cooling air, thereby reducing the consumption of cooling air and improving the overall efficiency of the turbine 1300.

Meanwhile, a throttle section TH1, which has a smaller cross-sectional area than the inner region of the channel, is formed at the longitudinal outer edge of each of the first and second cooling channels 1630a and 1630b. The throttle section TH1 is provided at the longitudinal end portion of each of the discharge channels 1632 and 1636. The throttle section (TH1) may be formed in a cylindrical shape, and a step may be formed at a portion at which the throttle section TH1 and the corresponding discharge channel 1632 or 1636 are connected.

Accordingly, when the throttle section TH1 is formed, cooling air in the first cooling channel 1630a and the second cooling channel 1630b may be discharged with greater momentum, thereby enhancing the cooling efficiency and reliably preventing leakage of combustion gas.

FIG. 6 is a perspective view illustrating a rib turbulator.

The cooling channel 1630 and the rib turbulator 1637 may be manufactured by using an additive manufacturing (AM) method. Additive manufacturing (AM) is a 3D-printing technology that fabricates a three-dimensional object by depositing successive layers of material. By using this AM technology, it is possible to manufacture fine and complex structures that were previously impossible to produce with conventional methods.

The AM technology may generally be divided into a modeling stage, a printing stage, and a post-processing stage.

In the modeling stage, three-dimensional data are typically created using CAD or other 3D modeling software, although such data may also be obtained using a 3D scanner. A standard data interface between CAD and a 3D printer is generally the STL file format, while files generated by a 3D scanner commonly use the PLY file format.

In the printing step, the 3D printer fabricates an object by using a 3D model generated in the modeling step. Specifically, the STL file is read to generate virtual cross-sections from the CAD model so as to form successive layers of material, such as powder.

Subsequently, in the post-processing stage, processes such as polishing, color coating, and part assembly are performed to fabricate the cooling channels 1630 and the rib turbulators 1637.

In the present disclosure, the cooling channel 1630 and the rib turbulators 1637 formed in the cooling channel 1630 are referred to as a ring segment cooling structure.

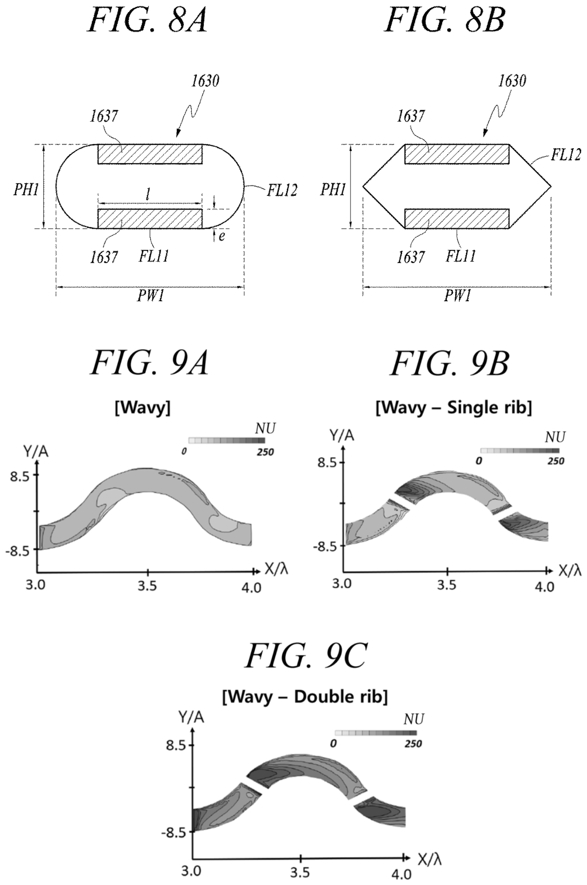

Referring to FIG. 6, the rib turbulator 1637 may be a rectangular prism formed with a predetermined lateral dimension w, a predetermined height e, and a predetermined length l. Here, the lateral dimension w of the rib turbulator 1637 denotes a dimension in a direction parallel to an imaginary center line L of the cooling channel 1630 (see FIG. 7), the height dimension e of the rib turbulator 1637 denotes a dimension in a direction (z-direction) perpendicular to the imaginary center line L in an up-and-down vertical orientation, and the length l of the rib turbulator 1637 denotes a dimension in a direction across the cross-section of the cooling channel 1630 (see FIG. 8). Of course, the shape is not limited thereto.

Specifically, when the width of the cross-section of the cooling channel 1630 is defined as W, it is preferable that the lateral dimension w of the rib turbulator 1637 is within the range of 0.1W ≤ w ≤ 0.3W. Further, when the height of the cross-section of the cooling channel 1630 is defined as H, it is preferable that the height dimension e of the rib turbulator 1637 is within the range of 0.1H ≤ e ≤ 0.3H. Here, the minimum value of each of 0.1W and 0.1H is 0.2 mm, which corresponds to the minimum size manufacturable by an additive manufacturing (AM) method using 3D printing technology.

In this case, it is preferable that a lateral dimension w of the rib turbulator 1637 is within a range of 0.1W ≤ w ≤ 0.3W, a height e thereof is within a range of 0.1H ≤ e ≤ 0.3H, and an angle α formed between a longitudinal direction of the rib turbulator 1637 and a direction of a central axis (a y-axis direction) of the turbine 1300 is within a range of 90° ≤ α ≤ 135°.

Accordingly, when each of the cooling channels 1630 is formed in a wavy shape and the rib turbulators 1637 are formed within the cooling channel 1630, a swirling phenomenon of cooling air caused by the rib turbulators 1637, together with an increase in the contact area and residence time of the cooling air due to the cooling channel 1630, may further enhance cooling efficiency.

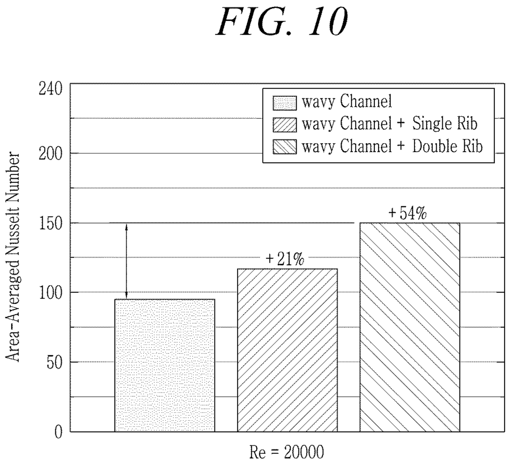

The above numerical ranges will be further described below with reference to FIGS. 9 and 10.

FIG. 7 is an enlarged view of portion A of FIG. 5.

Referring to FIG. 7, the wavy-shaped cooling channel 1630 has a shape in which a plurality of unit channel segments T is connected in series with each of the unit channel segments T having one convex portion T1 and one concave portion T2, and the rib turbulator 1637 may include a plurality of rib turbulators provided on each of the unit channel segments T. In FIG. 7, one-half of a concave portion T2 is illustrated on each of opposite sides of one convex portion T1.

Each of the rib turbulators 1637, which are provided as a pair on each unit channel segment T, has the lateral dimension w in the range of 0.1W ≤ w ≤ 0.3W and the height dimension e in the range of 0.1H ≤ e ≤ 0.3H. In addition, the angle α formed between the longitudinal direction of the rib turbulator 1637 and the direction of the central axis (the y-axis direction) of the turbine 1300 is in the range of 90° ≤ α ≤ 135°. In this case, the angle α of the rib turbulator 1637 formed on a first side (left side) with respect to the convex portion T1 is in the range of +90° ≤ α ≤ +135°, while the angle α of the rib turbulator 1637 formed on a second side (right side) with respect to the convex portion T1 is in the range of -135° ≤ α ≤ - 90°.

When the angle of the rib turbulator 1637 is designed within an acute range, for example, 45° to 60°, a cooling performance effect caused by vortices generated in the cooling channel 1630 is not significant. In the present disclosure, the angle of the rib turbulator 1637 is designed within an obtuse range so that a longitudinal direction thereof opposes the flow direction of cooling air in the cooling channel 1630, thereby enhancing the cooling performance effect caused by vortices.

It is preferable that the rib turbulator 1637 is installed at the portion at which the convex portion T1 and the concave portion T2 are in contact with each other. That is, a first end of the rib turbulator 1637 is preferably positioned on the concave portion T2, and a second end of the rib turbulator 1637 is preferably positioned on the convex portion T1.

FIGS. 8A and 8B are cross-sectional views of portion B of FIG. 7 as seen in direction b.

Referring to FIGS. 8A and 8B, it is preferable that the pair of rib turbulators 1637 be formed to protrude respectively from upper and lower surfaces of the cooling channel 1630 in mutually opposing directions. Of course, this does not exclude the possibility that a single rib turbulator 1637 is formed on either the lower surface or the upper surface of the cooling channel 1630.

Referring to FIG. 8A, the cooling channel 1630 has a structure in which a width PW1 extending in a lateral direction of the shield wall 1611 is greater than a height PH1 extending in a thickness direction of the shield wall 1611. The cooling channel 1630 may have a longitudinal cross-section including a central portion FL11 having a uniform height and an outer portion FL12 having a width gradually decreasing toward an outer side. Here, the outer portion may be connected in an arcuate shape.

Alternatively, referring to FIG. 8B, the cooling channel 1630 may have a longitudinal cross-section including a central portion FL11 having a uniform height and an outer portion FL12 having a width gradually decreasing toward an outer side. The outer portion FL12 may be formed of two inclined surfaces that are inclined relative to the central portion FL11.

As described above, when the cooling channel 1630 has a structure in which the width thereof is greater than the height thereof, cooling heat may be transferred more efficiently in one direction compared to a circular structure, and thus heat generated on the inner portion of the ring segment 1600 (a surface facing the blades) may be efficiently cooled. In addition, when the cooling channel 1630 has a track-shaped cross-section (as seen in FIG. 8A) including the central portion FL11, which is horizontal, and the outer portion FL12 that is arcuately curved or has two inclined surfaces (as seen in FIG. 8B), the cooling efficiency may be further improved.

Next, referring to FIGS. 9A, 9B, 9C, and 10, the cooling efficiency of the cooling channel having the rib turbulators formed therein according to an embodiment of the present disclosure will be described.

FIGS. 9A, 9B, 9C, and 10 are diagrams illustrating the comparison of the cooling efficiency of a cooling channel with rib turbulators according to an embodiment of the present disclosure with the cooling efficiency of a cooling channel without rib turbulators.

FIG. 9A illustrates a comparative example (Wavy) in which only the wavy-shaped cooling channel 1630 without rib turbulators is formed, FIG. 9B illustrates a first embodiment (Wavy - Single rib) in which a single rib turbulator 1637 is formed on either the lower or upper surface of the cooling channel 1630, and FIG. 9C illustrates a second embodiment (Wavy - Double rib) in which a pair of rib turbulators 1637 is formed to protrude respectively from the upper and lower surfaces of the cooling channel 1630 in mutually opposing directions.

FIGS. 9A, 9B, and 9C are distribution diagrams of the Nusselt number for a comparative example and embodiments of the present disclosure. The Nusselt number (Nu) is a dimensionless number in heat transfer, representing a relative ratio between convective heat transfer and conductive heat transfer. In FIG. 9, cooling air flows from left to right.

Referring to FIG. 9A, it can be seen that the Nusselt number (Nu) has a low value and shows no significant change.

Referring to FIGS. 9B and 9C, the Nusselt number (Nu) varies significantly in the downstream region of the rib turbulators 1637, and in particular, the variation is greater in the "Double rib" than in the "Single rib." This indicates that a vortex generation effect is greater in the second embodiment (Double rib) than that in the first embodiment (Single rib), resulting in a more significant cooling effect. Of course, the first embodiment (Single rib) also exhibits a significantly greater cooling effect compared to the comparative example shown in FIG. 9A.

FIG. 10 is a graph illustrating the distribution of FIGS. 9A, 9B, and 9C.

Referring to FIG. 10, it can be seen that, compared to the comparative example, the cooling effect of the first embodiment (Single rib) is increased by 21%, and the cooling effect of the second embodiment (Double rib) is increased by 54%.

Accordingly, when the cooling channel 1630 is formed in a wavy shape and the rib turbulators 1637 are formed within the cooling channel 1630, it can be seen that a swirling phenomenon of cooling air caused by the rib turbulators 1637, together with an increase in the contact area and residence time of the cooling air due to the cooling channel 1630, further enhances the cooling efficiency. In particular, in the case of the second embodiment (Wavy-Double Rib), in which the pair of rib turbulators 1637 is formed to protrude respectively from the upper and lower surfaces of the cooling channels 1630 in mutually opposing directions, it can be seen that the cooling effect is maximized.

While the embodiments of the present disclosure have been described, it will be apparent to those skilled in the art that various modifications and variations can be made in the present disclosure through addition, change, omission, or substitution of components without departing from the spirit of the disclosure as set forth in the appended claims, and such modifications and changes may also be included within the scope of the present disclosure.

## Claims

1. A ring segment cooling structure comprising:
a wavy-shaped cooling channel (1630) formed inside a shield wall (1611) of a ring segment (1600) mounted to a casing that accommodates blades, the cooling channel allowing cooling air to flow therethrough; and
a rib turbulator (1637) installed in the wavy-shaped cooling channel.

2. The ring segment cooling structure of claim 1, wherein when a width of the cooling channel (1630) is defined as W, a lateral dimension w of the rib turbulator (1637) satisfies 0.1W ≤ w ≤ 0.3W, and when a height of the cooling channel is defined as H, a height dimension e of the rib turbulator satisfies 0.1H ≤ e ≤ 0.3H.

3. The ring segment cooling structure of claim 2, wherein an angle α formed between a longitudinal direction of the rib turbulator (1637) and a direction of a central axis of a turbine satisfies 90° ≤ α ≤ 135°.

4. The ring segment cooling structure of claim 1, wherein the rib turbulator (1637) is formed to protrude from each of upper and lower surfaces of the cooling channel (1630) in mutually opposing directions.

5. The ring segment cooling structure of claim 1, wherein the cooling channel (1630) has a shape in which a plurality of unit channel sections (T) is connected in series with each of the unit channel sections having one convex portion (T1) and one concave portion (T2), and the rib turbulator (1637) comprises a plurality of rib turbulators provided in each of the unit channel sections.

6. The ring segment cooling structure of claim 5, wherein the rib turbulator (1637) is installed at a portion at which the convex portion (T1) and the concave portion (T2) are in contact with each other.

7. The ring segment cooling structure of claim 1, wherein the cooling channel (1630) and the rib turbulator (1637) are manufactured by using an additive manufacturing (AM) method.

8. A ring segment comprising:
a shield wall (1611) facing an inner wall of a turbine casing (1800) that accommodates blades;
a first hook portion (1612) and a second hook portion (1613) protruding from the shield wall toward the turbine casing and coupled to the turbine casing (1800);
a main cavity (CV) formed between the first hook portion and the second hook portion; and
a cooling structure which is formed within the shield wall and through which cooling air flows, wherein the cooling structure comprises:
a wavy-shaped cooling channel (1630) which is formed within the shield wall and through which cooling air flows; and
a rib turbulator (1637) installed in the wavy-shaped cooling channel.

9. The ring segment of claim 8, wherein when a width of the cooling channel (1630) is defined as W, a lateral dimension w of the rib turbulator (1637) satisfies 0.1W ≤ w ≤ 0.3W, and
when a height of the cooling channel is defined as H, a height dimension e of the rib turbulator satisfies 0.1H ≤ e ≤ 0.3H.

10. The ring segment of claim 9, wherein an angle α formed between a longitudinal direction of the rib turbulator (1637) and a direction of a central axis of a turbine satisfies 90° ≤ α ≤ 135°.

11. The ring segment of claim 8, wherein the rib turbulator (1637) is formed to protrude from each of upper and lower surfaces of the cooling channel (1630) in mutually opposing directions.

12. The ring segment of claim 8, wherein the cooling channel (1630) has a shape in which a plurality of unit channel sections (T) is connected in series with each of the unit channel sections having one convex portion (T1) and one concave portion (T2), and
the rib turbulator (1637) comprises a plurality of rib turbulators provided in each of the unit channel sections.

13. The ring segment of claim 12, wherein the rib turbulator (1637) is installed at a portion at which the convex portion (T1) and the concave portion (T2) are in contact with each other.

14. The ring segment of claim 8, wherein the cooling channel (1630) and the rib turbulator (1637) are manufactured by using an additive manufacturing (AM) method.
